(19) Europäisches Patentamt
European Patent Office
Office européen des brevets

(11) EP 4 654 694 A1

(12) EUROPEAN PATENT APPLICATION
published in accordance with Art. 153(4) EPC

(43) Date of publication:
**26.11.2025 Bulletin 2025/48**

(21) Application number: **24752797.1**

(22) Date of filing: **02.02.2024**

(51) International Patent Classification (IPC):
***H04W 68/00*** *(2009.01)*

(52) Cooperative Patent Classification (CPC):
**H04W 68/00; H04W 76/28**

(86) International application number:
**PCT/CN2024/075410**

(87) International publication number:
**WO 2024/164941 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.02.2023 CN 202310131303**

(71) Applicant: **Huawei Technologies Co., Ltd.**
**Shenzhen, Guangdong 518129 (CN)**

(72) Inventors:
- **XIANG, Hongyu**
  **Shenzhen, Guangdong 518129 (CN)**
- **CHEN, Lei**
  **Shenzhen, Guangdong 518129 (CN)**
- **LI, Chenwan**
  **Shenzhen, Guangdong 518129 (CN)**
- **SHI, Yulong**
  **Shenzhen, Guangdong 518129 (CN)**

(74) Representative: **Epping - Hermann - Fischer Patentanwaltsgesellschaft mbH**
**Schloßschmidstraße 5**
**80639 München (DE)**

# (54) TERMINAL PAGING METHOD AND APPARATUS

(57) This application provides a paging method and a paging apparatus for a terminal. A discontinuous reception cycle of the terminal in an inactive state is an extended discontinuous reception cycle, and the paging method is applied to an access network device. In the technical solutions provided in this application, first information from a core network element is received to determine an identity of a terminal, so as to determine a paging occasion for the terminal. After second information from the core network element is received, access network paging is performed for the terminal on the paging occasion for the terminal. According to the technical solutions provided in this application, a problem that an access network device pages UE in an inactive state in an eDRX cycle can be resolved.

Terminal
Access network device
Core network element
S501: Receive first information, where the first information indicates an identity of the terminal
S502: Receive second information, where the second information is used to trigger access network paging for the terminal
S503: Perform access network paging on a paging occasion

FIG. 5



Processed by Luminess, 75001 PARIS (FR)

## Description

This application claims priority to Chinese Patent Application No. 202310131303.6, filed with the China National Intellectual Property Administration on February 10, 2023 and entitled "PAGING METHOD AND PAGING APPARATUS FOR TERMINAL", which is incorporated herein by reference in its entirety.

## TECHNICAL FIELD

This application relates to the field of wireless communication technologies, and in particular, to a paging method and a paging apparatus for a terminal.

## BACKGROUND

In an extended discontinuous reception (extended discontinuous reception, eDRX) technology, it is proposed that after releasing user equipment (user equipment, UE) to an inactive (INACTIVE) state, an access network device may page the UE in the inactive state by sending an access network paging (radio access network paging, RAN paging) message. After detecting, through monitoring, the RAN paging message for paging the UE, the UE is reconnected to a network in response to the RAN paging message.

However, the eDRX technology does not provide a solution to the following problem: how an access network device pages UE in an inactive state in an eDRX cycle, especially when the inactive eDRX cycle is greater than 10.24s.

## SUMMARY

This application provides a paging method and a paging apparatus for a terminal, to page user equipment (user equipment, UE) in an inactive state in an extended discontinuous reception (extended discontinuous reception, eDRX) cycle.

According to a first aspect, this application provides a paging method for a terminal. A discontinuous reception cycle of the terminal in an inactive state is an extended discontinuous reception cycle, the method is applied to a first access network device, and the method includes: receiving first information for a core network element, where the first information indicates an identity of the terminal, and the identity is used to determine a paging occasion for the terminal; receiving second information for the core network element, where the second information is used to trigger access network paging for the terminal; and performing access network paging for the terminal on the paging occasion.

The access network device may be a base station (the next generation NodeB, gNodeB, gNB), and the core network element may be an access and mobility management function (access and mobility management function, AMF) network element.

In a possible implementation, the identity of the UE may include a first identity index value of the UE and a second identity index value of the UE.

The first identity index value may be determined based on the identity of the UE. For example, the first identity index value may be UE_ID. Specifically, UE_ID is 12 least significant bits (bit) of a 5th generation system temporary mobile subscriber identity (5th generation system temporary mobile subscription identifier, 5G-S-TMSI) of the UE, and the 5G-S-TMSI is a shortened form of a globally unique temporary UE identifier (5G Globally Unique Temporary Identifier, 5G-GUTI).

The second identity index value may be determined based on the identity of the UE. For example, the second identity index value may be a terminal device identity index value UE_ID_H obtained through a hash (Hash) operation. Specifically, UE_ID_H is 13 most significant bits of a hashed identifier (Hashed ID), and the hashed ID is a frame check sequence obtained by performing an operation on 32 least significant bits of a 5G-S-TMSI according to a frame check sequence generation method.

In another possible implementation, optionally, the identity of the UE may be 32 least significant bits of a 5G-S-TMSI.

Optionally, the identity of the UE may alternatively be 32 least significant bits of a temporary mobile subscriber identity (serving-temporary mobile subscriber identity, S-TMSI).

In this technical solution, the access network device may receive the identity of the UE from the core network element, and may determine the paging occasion (paging occasion, PO) for the UE based on the identity, so as to complete paging for the UE.

With reference to the first aspect, in a possible implementation, receiving the second information from the core network element includes: receiving an N2 message from the core network element, where the N2 message carries the second information, and the second information includes an inactive radio network temporary identifier or an identifier that uniquely identifies a UE association over an NG interface within an access network device.

In this implementation, before the UE wakes up next time to monitor a paging message, the core network element may send the N2 message to the access network device, to trigger the access network device to start access network paging for the UE.

The second information includes the inactive radio network temporary identifier (inactive radio network temporary identifier, I-RNTI), to explicitly indicate the identity of the paged UE.

Optionally, the second information may alternatively include the identifier that uniquely identifies the UE association over the NG interface within the access network device (RAN UE NGAP ID). The RAN UE NGAP ID is used to uniquely identify the UE over the NG interface within the access network device. The access network device may determine, by using the RAN UE NGAP ID, the UE to be paged, and may further determine an I-RNTI of the UE by using a correspondence that is between the RAN UE NGAP ID and the I-RNTI and that is stored in the device.

With reference to the first aspect, in a possible implementation, receiving the first information from the core network element includes: receiving a first message from the core network element, where the first message includes an initial context setup request message, a terminal device context modification request message, a handover request message, or a path switch request acknowledgment message, and the first message carries the first information.

In this implementation, the first information may be carried in the first message, and the first message includes the initial context setup request message (UE CONTEXT MODIFICATION REQUEST), the terminal device context modification request message (UE CONTEXT MODIFICATION REQUEST), the handover request message (HANDOVER REQUEST), or the path switch request acknowledgment message (PATH SWITCH REQUEST ACKNOWLEDGE).

For example, in a step in which the core network element creates a UE context (Context) in the access network device by using the INITIAL CONTEXT SETUP REQUEST message, the core network element may send the first information to the access network device by using the INITIAL CONTEXT SETUP REQUEST message.

For another example, in a step in which the core network element modifies a UE context in the access network device by using the CONTEXT MODIFICATION REQUEST message, the core network element may send the first information to the access network device by using the CONTEXT MODIFICATION REQUEST message.

With reference to the first aspect, in a possible implementation, the N2 message further carries the first information.

In this implementation, the access network device may further receive the first information, that is, the identity of the UE, from the N2 message sent by the core network element, so as to determine the PO for the UE based on the information.

With reference to the first aspect, in a possible implementation, the identity includes a first identity index value of the terminal and/or a second identity index value of the terminal.

In this implementation, the first identity index value may be an identity index value of the UE, for example, UE_ID, and the second identity index value may be a terminal device identity index value obtained through a hash (Hash) operation, for example, UE_ID_H.

With reference to the first aspect, in a possible implementation, the identity includes 32 least significant bits of a globally unique temporary terminal identifier.

In this implementation, the identity of the UE may be 32 least significant bits of a 5G-S-TMSI.

The access network device may determine the identity of the UE by using the 32 least significant bits of the 5G-S-TMSI.

For example, 12 least significant bits in the 32 least significant bits of the 5G-S-TMSI are used as UE_ID; and 13 most significant bits of a hashed ID obtained by performing an operation on the 32 least significant bits of the 5G-S-TMSI according to a frame check sequence generation method are used as UE_ID_H.

Optionally, the identity of the UE may alternatively be 32 least significant bits of an S-TMSI.

A method for determining the identity of the UE by using the 32 least significant bits of the S-TMSI is consistent with a method for determining the identity of the UE by using the 32 least significant bits of the 5G-S-TMSI.

With reference to the first aspect, in a possible implementation, the identity includes a first-part identity and a second-part identity; and receiving the first information from the core network element includes: receiving a first message from the core network element, where the first message includes an initial context setup request message, a terminal device context modification request message, a handover request message, or a path switch request acknowledgment message, and the first message carries the first-part identity; and receiving an N2 message from the core network element, where the N2 message carries the second-part identity.

In this implementation, the access network device may receive the first-part identity in the identity of the UE from the first information sent by the core network element, and receive the second-part identity in the identity of the UE from the N2 message sent by the core network element, to determine the PO for the UE based on the first-part identity and the second-part identity, so as to complete paging for the UE.

With reference to the first aspect, in a possible implementation, the first-part identity includes a first identity index value of the terminal, and the second-part identity includes a second identity index value of the terminal.

In this implementation, the first-part identity may be the first identity index value of the UE, for example, UE_ID, and the second-part identity may be the second identity index value of the UE, for example, UE_ID_H.

With reference to the first aspect, in a possible implementation, the method further includes: sending the first information to a second access network device.

In this implementation, when the UE is in an inactive (INACTIVE) state, the UE may move to another base station. In this case, as a last serving base station (anchor gNB) of the UE, when paging the UE, the first access network device also notifies another base station in an RNA area (RAN notification area) to page the UE.

Therefore, the first access network device sends an inactive extended discontinuous reception (INACTIVE eDRX) cycle configuration of the UE to the second access network device through an Xn interface or an F1 interface.

The Xn interface is an interface for sending information between access network devices, and the F1 interface is an interface for sending information between a central unit (central unit, CU) and a distributed unit (distributed unit, DU) of the access network device.

According to a second aspect, this application provides a paging method for a terminal. A discontinuous reception cycle of the terminal in an inactive state is an extended discontinuous reception cycle, the method is applied to a core network element, and the method includes: sending first information to a first access network device, where the first information indicates an identity of the terminal, and the identity is used to determine a paging occasion for the terminal; and sending second information to the first access network device, where the second information is used to trigger access network paging for the terminal.

In this technical solution, the core network element may send the identity of the UE to the access network device, so that the access network device can determine the PO for the UE based on the identity, so as to complete paging for the UE.

With reference to the second aspect, in a possible implementation, sending the second information to the first access network device includes: sending an N2 message to the first access network device, where the N2 message carries the second information, and the second information includes an inactive radio network temporary identifier or an identifier that uniquely identifies a UE association over an NG interface within an access network device.

In this implementation, the second information may include the I-RNTI, to explicitly indicate the identity of the paged UE.

Optionally, the second information may alternatively include the RAN UE NGAP ID. After receiving the RAN UE NGAP ID, the access network device may determine the I-RNTI of the UE based on a correspondence between the RAN UE NGAP ID and the I-RNTI.

With reference to the second aspect, in a possible implementation, sending the first information to the first access network device includes: sending a first message to the first access network device, where the first message includes an initial context setup request message, a terminal device context modification request message, a handover request message, or a path switch request acknowledgment message, and the first message carries the first information.

In this implementation, the first information sent by the core network element to the access network device may be carried in the first message. The first message includes information such as the initial context setup request message, the terminal device context modification request message, the handover request message, or the path switch request acknowledgment message.

With reference to the second aspect, in a possible implementation, the N2 message further carries the first information.

In this implementation, the core network element may further send the first information, that is, the identity of the UE, to the access network device by using the N2 message, so that the access network device can determine the PO for the UE based on the information.

With reference to the second aspect, in a possible implementation, the identity includes a first identity index value of the terminal and/or a second identity index value of the terminal.

In this implementation, the first identity index value may be an identity index value of the UE, for example, UE_ID, and the second identity index value may be a terminal device identity index value obtained through a hash (Hash) operation, for example, UE_ID_H.

With reference to the second aspect, in a possible implementation, the identity includes 32 least significant bits of a globally unique temporary terminal identifier.

In this implementation, the identity of the UE may be 32 least significant bits of a 5G-S-TMSI.

The access network device may determine the identity of the UE by using the 32 least significant bits of the 5G-S-TMSI.

For example, 12 least significant bits in the 32 least significant bits of the 5G-S-TMSI are used as UE_ID; and a hashed ID may be obtained by performing an operation on the 32 least significant bits of the 5G-S-TMSI according to a frame check sequence generation method, and 13 most significant bits of the hashed ID are used as UE_ID_H.

Optionally, the identity of the UE may alternatively be 32 least significant bits of an S-TMSI.

A method for determining the identity of the UE by using the 32 least significant bits of the S-TMSI is consistent with a method for determining the identity of the UE by using the 32 least significant bits of the 5G-S-TMSI.

With reference to the second aspect, in a possible implementation, the identity includes a first-part identity and a second-part identity, and sending the first information to the first access network device includes: sending a first message to the first access network device, where the first message includes an initial context setup request message, a terminal device context modification request message, a handover request message, or a path switch request acknowledgment message, and the first message carries the first-part identity; and sending an N2 message to the first access network device, where the N2 message carries the second-part identity.

In this implementation, the core network element may send the first-part identity in the identity of the UE to the access network device by using the first information, and send the second-part identity in the identity of the UE to the access network device by using the N2 message, so that the access network device can determine the PO for the UE based on the first-part identity and the second-part identity, so as to complete paging for the UE.

With reference to the second aspect, in a possible implementation, the first-part identity includes a first identity index value of the terminal, and the second-part identity includes a second identity index value of the terminal.

In this implementation, the first-part identity may be the first identity index value of the UE, for example, UE_ID, and the second-part identity may be the second identity index value of the UE, for example, UE_ID_H.

According to a third aspect, this application provides a paging apparatus for a terminal. The apparatus includes modules configured to implement the method in any one of the first aspect or the implementations of the first aspect, and each module may be implemented in a form of hardware and/or software.

For example, the apparatus may include a transceiver module and a processing module. The transceiver module is configured to receive first information from a core network element, where the first information indicates an identity of the terminal, and the identity is used to determine a paging occasion for the terminal. The transceiver module is further configured to receive second information from the core network element, where the second information is used to trigger access network paging for the terminal. The processing module is configured to perform access network paging for the terminal on the paging occasion.

In a possible implementation, the transceiver module is further configured to receive an N2 message from the core network element, where the N2 message carries the second information, and the second information includes an inactive radio network temporary identifier or an identifier that uniquely identifies a UE association over an NG interface within an access network device.

In a possible implementation, the transceiver module is further configured to receive a first message from the core network element, where the first message includes an initial context setup request message, a terminal device context modification request message, a handover request message, or a path switch request acknowledgment message, and the first message carries the first information.

In a possible implementation, the transceiver module is further configured to receive a first message from the core network element, where the first message includes an initial context setup request message, a terminal device context modification request message, a handover request message, or a path switch request acknowledgment message, and the first message carries a first-part identity; and the transceiver module is further configured to receive an N2 message from the core network element, where the N2 message carries a second-part identity.

In a possible implementation, the transceiver module is further configured to send the first information to a second access network device.

According to a fourth aspect, this application provides a paging apparatus for a terminal. The apparatus includes modules configured to implement the method in any one of the second aspect or the implementations of the second aspect, and each module may be implemented in a form of hardware and/or software.

For example, the apparatus may include a transceiver module. The transceiver module is configured to send first information to a first access network device, where the first information indicates an identity of the terminal, and the identity is used to determine a paging occasion for the terminal. The transceiver module is further configured to send second information to the first access network device, where the second information is used to trigger access network paging for the terminal.

In a possible implementation, the transceiver module is further configured to send an N2 message to the first access network device, where the N2 message carries the second information, and the second information includes an inactive radio network temporary identifier or an identifier that uniquely identifies a UE association over an NG interface within an access network device.

In a possible implementation, the transceiver module is further configured to send a first message to the first access network device, where the first message includes an initial context setup request message, a terminal device context modification request message, a handover request message, or a path switch request acknowledgment message, and the first message carries the first information.

In a possible implementation, the transceiver module is further configured to send a first message to the first access network device, where the first message includes an initial context setup request message, a terminal device context modification request message, a handover request message, or a path switch request acknowledgment message, and the first message carries a first-part identity; and the transceiver module is further configured to send an N2 message to the first access network device, where the N2 message carries a second-part identity.

According to a fifth aspect, this application provides an apparatus, including at least one processor and a communication interface. The communication interface and the at least one processor are interconnected through a line, and the at least one processor is configured to run a computer program or instructions, to perform the method according to any one of the first aspect or the possible implementations of the first aspect.

Optionally, the apparatus may be an access network device, or may be a chip used in the access network device.

According to a sixth aspect, this application provides an apparatus, including at least one processor and a communication interface. The communication interface and the at least one processor are interconnected through a line, and the at least one processor is configured to run a computer program or instructions, to perform the method according to any one of the second aspect or the possible implementations of the second aspect.

Optionally, the apparatus may be a core network element.

According to a seventh aspect, this application provides a computer-readable medium. The computer-readable medium stores program code for execution by a device, and the program code is used to perform the method according to any one of the first aspect, the second aspect, or the possible implementations of the first aspect or the second aspect.

According to an eighth aspect, this application provides a computer program product including instructions. When the computer program product runs on a computer, the computer is enabled to perform the method according to any one of the first aspect, the second aspect, or the possible implementations of the first aspect or the second aspect.

## BRIEF DESCRIPTION OF DRAWINGS

FIG. 1 is a diagram of an architecture of a communication system according to an embodiment of this application;
FIG. 2 is a diagram of an architecture of a communication system according to another embodiment of this application;
FIG. 3 is a diagram of an application scenario according to an embodiment of this application;
FIG. 4 is a diagram of an application scenario according to another embodiment of this application;
FIG. 5 is a schematic flowchart of a paging method for a terminal according to an embodiment of this application;
FIG. 6 is a schematic flowchart of a paging method for a terminal according to another embodiment of this application;
FIG. 7 is a diagram of a structure of a paging apparatus for a terminal according to an embodiment of this application; and
FIG. 8 is a diagram of a structure of a paging apparatus for a terminal according to another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application for a person skilled in the art with reference to particular embodiments.

## DESCRIPTION OF EMBODIMENTS

Example embodiments are described in detail herein, and examples of the example embodiments are presented in the accompanying drawings. When the following description relates to the accompanying drawings, unless otherwise specified, same numbers in different accompanying drawings represent a same element or similar elements. Implementations described in the following example embodiments do not represent all implementations consistent with this application. On the contrary, the implementations are merely examples of apparatuses and methods that are described in the appended claims in detail and that are consistent with some aspects of this application.

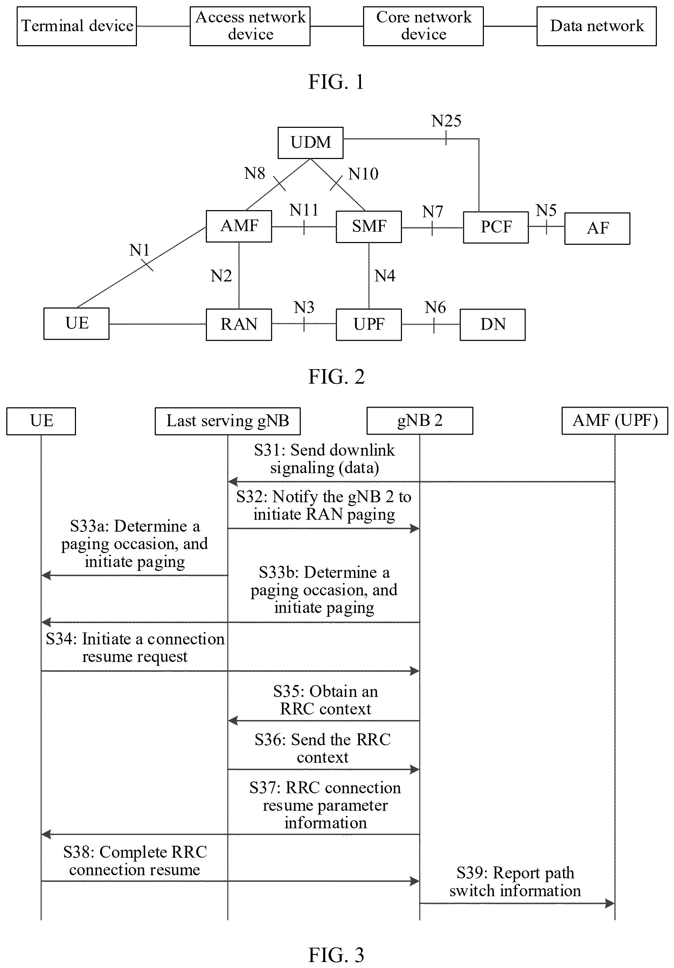

FIG. 1 is a diagram of an architecture of a communication system according to an embodiment of this application. As shown in FIG. 1, the communication system may be a network architecture of a 5th generation (5th generation, 5G) communication system, and includes a terminal device, an access network device, a core network device, and a data network (data network, DN). The terminal device, the access network device, and the core network device are main parts of the architecture.

The terminal device may be user equipment (user equipment, UE), an access terminal, a UE unit, a UE station, a mobile station, a remote station, a remote terminal, a mobile device, a UE terminal, a terminal, a wireless communication device, a multimedia device, a streaming media device, a UE agent, a UE apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a future 5G network, a terminal in a future evolved public land mobile network (public land mobile network, PLMN), or the like.

The access network device is a device that can communicate with the terminal device, and may be a base station, a relay station, or an access point. The base station may be a base transceiver station (base transceiver station, BTS) in a global system for mobile communications (global system for mobile communications, GSM) or a code division multiple access (code division multiple access, CDMA) network, may be a node base station (node base station, NB) in wideband code division multiple access (wideband code division multiple access, WCDMA), may be an evolved (evolved) NB (eNB or eNodeB) in long term evolution (long term evolution, LTE), may be a radio controller in a cloud radio access network (cloud radio access network, CRAN) scenario, may be a base station device in a future 5G network or an access network device in a future evolved PLMN, or may be a wearable device or a vehicle-mounted device. In embodiments of this application, an apparatus configured to implement a function of the access network device may be the access network device, or may be an apparatus that can support the access network device in implementing the function, for example, a chip system. The apparatus may be installed in the access network device, or may be another device that can implement the function of the access network device. This is not limited herein. In embodiments of this application, the chip system may include a chip, or may include a chip and another discrete component.

The core network (core network, CN) device corresponds to different devices in different communication systems, for example, may correspond to a serving general packet radio service (general packet radio service, GPRS) support node (serving GPRS support node, SGSN) and/or a gateway GPRS support node (gateway GPRS support node, GGSN) in 3G; may correspond to a mobility management entity (mobility management entity, MME) and/or a serving gateway (serving gateway, S-GW) in a 4th generation (fourth generation, 4G) communication system; and may correspond to an access and mobility management function (access and mobility management function, AMF), a session management function (session management function, SMF), or a user plane function (user plane function, UPF) in 5G. In embodiments of this application, an apparatus configured to implement a function of the core network device may be the core network device, or may be an apparatus that can support the core network device in implementing the function, for example, a chip system. The apparatus may be installed in the core network device, or may be another device that can implement the function of the core network device. This is not limited herein.

The DN is an operator network that provides a data transmission service for a user, for example, an internet protocol multimedia service (internet protocol multimedia service, IMS) or the internet (internet).

For example, FIG. 2 is a diagram of an architecture of a more detailed communication system. As shown in FIG. 2, the architecture of the communication system includes UE, an access network, a core network, and a DN.

The UE is a network terminal device such as a mobile phone or an internet of things terminal device.

The access network is configured to implement functions related to radio access, and includes a radio access network (radio access network, RAN).

For example, the RAN serves as a device that provides radio access for the UE, and includes but is not limited to a base station (evolved NodeB, eNodeB), a wireless fidelity access point (wireless fidelity access point, Wi-Fi AP), a worldwide interoperability for microwave access base station (worldwide interoperability for microwave access base station, WiMAX BS), or the like.

The core network may include any one of the following network elements: an access and mobility management function (access and mobility management function, AMF), a session management function (session management function, SMF), a user plane function (user plane function, UPF), a policy control function (policy control function, PCF), a unified data management (unified data management, UDM) network element, and an application function (application function, AF). For example, functions of the foregoing network elements are as follows:

The AMF is mainly responsible for functions such as mobility management and access authentication/authorization in a mobile network, including user registration management, reachability detection, SMF network element selection, mobility status transition management, and the like. In addition, the AMF may be further responsible for transferring a user policy between the UE and the PCF network element.

The SMF is mainly responsible for functions such as session management (including session establishment, modification, and deletion management), execution of a control policy delivered by the PCF, UPF network element selection, and UE internet protocol (internet protocol, IP) address allocation in a mobile network.

As an interface to a data network, the UPF is mainly responsible for data packet routing and forwarding, a mobility anchor, an uplink classifier for supporting routing of a service flow to the data network, a branch point for supporting a multi-homed protocol data unit (Protocol Data Unit, PDU) session, and the like.

The PCF is responsible for providing policies such as a quality of service (quality of service, QoS) policy and a slice selection policy for the AMF and the SMF.

The UDM is configured to store user data such as subscription information and authentication/authorization information.

The AF is responsible for providing a service for a 3rd generation partnership project (3rd generation partnership project, 3GPP) network, for example, affecting service routing, and interacting with the PCF to perform policy control.

Refer to FIG. 2. An interface between the UE and the AMF is N1, an interface between the AMF and the RAN is N2, an interface between the RAN and the UPF is N3, an interface between the UPF and the SMF is N4, an interface between the PCF and the AF is N5, an interface between the UPF and the DN is N6, an interface between the SMF and the PCF is N7, an interface between the AMF and the UDM is N8, an interface between the UDM and the SMF is N10, an interface between the AMF and the SMF is N11, and an interface between the UDM and the PCF is N25.

The UE accesses the DN by establishing a PDU session from the UE to the RAN to the UPF to the DN.

To facilitate understanding of the technical solutions provided in this application, the following briefly describes an extended discontinuous reception (Extended Discontinuous Reception, eDRX) configuration of UE in an inactive (INACTIVE) state. The inactive eDRX configuration may be applied to the communication systems shown in FIG. 1 and FIG. 2.

In existing wireless communication, for example, in a long term evolution (long term evolution, LTE) network or a 5G new radio (new radio, NR) network, for UE in a radio resource control inactive (radio resource control_inactive, RRC_INACTIVE) state, although an RRC connection is established with a network, the connection is suspended. When the network needs to send downlink data to the UE in the inactive state, the network may send an access network paging (RAN paging) message to page the UE, to notify the UE to establish or resume an RRC connection, or notify the UE that a system message changes and the UE needs to read a changed system broadcast message again, or notify the UE to receive earthquake and tsunami warning system (earthquake and tsunami warning system, ETWS) information.

Specifically, when the UE is in the inactive state, from a perspective of a core network, the UE is still in a CM_CONNECTED state, but an RRC connection between the UE and an access network device is suspended. In this case, when the network needs to send data to the UE in the RRC_INACTIVE state, because the RRC connection between the UE and the access network device is suspended, the network needs to page the UE. In addition, because the core network considers that the UE is in the connected state in this case, the core network does not initiate paging, but a RAN node, for example, a base station (the next generation NodeB, gNodeB, gNB), initiates paging. This is referred to as RAN paging.

To reduce power consumption, the UE in the inactive state supports receiving a paging (paging) message in a manner of DRX. The DRX is also referred to as paging DRX. A DRX cycle (cycle) is determined by a smallest value in the following three values, that is, a specific DRX cycle configured by the RAN, a specific DRX cycle configured by the CN (if configured), and a default DRX cycle sent through system broadcast. With the DRX, the UE in the inactive state wakes up in only the DRX cycle to monitor the paging message, and keeps in a "sleep" state at other times, thereby reducing power consumption.

For the paging DRX, the UE in the inactive state monitors only a physical downlink control channel (physical downlink control channel, PDCCH) on a specific paging occasion (paging occasion, PO) in each DRX cycle. However, when monitoring the PO, the UE needs to first determine a position of a paging frame (paging frame, PF), and then determine a position of a PO associated with the PF. The PF is a radio frame, and may include one or more POs or a start point of a PO. A PO associated with a PF may start within the PF, or may start after the PF.

The UE may determine, based on a paging DRX configuration parameter, the PF and the PO to be monitored by the UE. Details are as follows:

A system frame number (system frame number, SFN) that satisfies the following formula is used as the PF:

$$(SFN + PF_offset) \bmod T = (T \operatorname{div} N) * (UE_ID \bmod N).$$

An index number i_s corresponding to the PO is determined according to the following formula:

$$i_s = \operatorname{floor}(UE_ID/N) \bmod Ns.$$

N, Ns, and PF_offset are configurations provided through system broadcast, N represents a total quantity of PFs in a DRX cycle T, Ns represents a total quantity of POs in each PF, and PF_offset is used to determine an offset (offset) of a PF.

UE_ID and T are associated with a specific configuration of the UE. T is a DRX cycle length of the UE, and is measured in frames. UE_ID may be determined in the following manner:
UE_ID = 5G-S-TMSI mod 1024, where 5G-S-TMSI is a shortened form of a globally unique temporary UE identifier (5G Globally Unique Temporary Identifier, 5G-GUTI).

To further reduce power consumption, an eDRX technology is proposed, and a sleep period of the UE is prolonged, so that the UE can enter the sleep state for a longer time.

An inactive eDRX configuration has two different cases based on a length of an eDRX cycle.

Case 1: An inactive eDRX cycle is less than or equal to 10.24s.

In this case, use of the eDRX cycle is the same as use of the DRX cycle. UE wakes up every inactive eDRX cycle to monitor a paging message. Specifically, when releasing the UE to an inactive state, a last serving base station of the UE provides an inactive eDRX configuration for the UE. Then, the UE moves to another base station. Because a core network considers that the inactive UE is still in a CM-CONNECTED state, data is directly sent to the last serving base station of the UE. In this case, the last serving base station of the UE notifies another base station in an RNA area to initiate paging, and the last serving base station also initiates paging. If detecting, through monitoring, a paging message belonging to the UE, the UE responds to the paging message and initiates connection resume from the another base station. The another base station is, for example, a gNB 2 in FIG. 3. The gNB 2 obtains a context of the UE from the last serving base station and resumes a connection for the UE.

For example, FIG. 3 is a diagram of an application scenario according to an embodiment of this application. As shown in FIG. 3, the method includes S31 to S39.

S31: An AMF (a UPF) sends downlink signaling (data) to a last serving base station of UE.

The AMF sends the downlink signaling to the last serving base station of the UE, or the UPF sends the downlink data to the last serving base station of the UE.

S32: The last serving base station notifies another base station in an RNA area to initiate paging.

The last serving base station sends an eDRX configuration of the UE to the another base station, to page the UE.

S33a: The last serving base station determines a paging occasion, and initiates RAN paging.

S33b: A gNB 2 determines a paging occasion, and initiates RAN paging.

S34: After receiving a paging message, the UE initiates a connection resume request.

For example, after receiving, through monitoring, the paging message, the UE sends an RRC resume request to the gNB 2, to request to resume an RRC connection.

S35: The gNB 2 obtains an RRC context from the last serving base station.

S36: The last serving base station sends the RRC context to the gNB 2.

S37: The gNB 2 sends RRC connection resume parameter information to the UE.

For example, the gNB 2 sends RRC resume to the UE.

S38: The UE completes RRC connection resume based on an RRC connection resume parameter sent by the gNB 2, and replies to the gNB 2.

For example, the UE sends an RRC resume complete message to the gNB 2.

S39: The gNB 2 reports path switch information to the AMF.

For example, the gNB 2 sends the path switch information to the AMF.

In this case, before paging the UE, the gNB needs to determine an inactive eDRX configuration to calculate a PF and a PO. UE_ID needs to be used to calculate the PF and the PO. UE_ID may be determined in the following manner:

$$\text{UE_ID} = \text{5G-S-TMSI mod } 4096.$$

It can be learned that UE_ID for working in the inactive eDRX configuration has 12 bits (bit), but only a 10-bit UE identity index value exists in an access network device. This does not satisfy an inactive eDRX configuration requirement.

Case 2: An inactive eDRX cycle is greater than 10.24s.

In this case, to further reduce power consumption, a paging time window (paging time window, PTW) is introduced to further prolong the inactive eDRX cycle, so that the inactive eDRX cycle exceeds 10.24s. UE needs only to wake up within time of the PTW, and monitor a specific PO within the PTW based on the inactive eDRX cycle, so that the UE can enter a sleep state for a longer time.

The UE and a network need to determine a paging hyperframe (paging hyperframe, PH) to which the PTW belongs, a frame number corresponding to a start position of the PTW in the PH, and a PF and a PO in the PTW.

For example, a hyper system frame number (hyper system frame number, H-SFN) that satisfies the following formula may be used as the PH:

$$\text{H-SFN mod TeDRX} = (\text{UE_ID_H mod TeDRX}).$$

The frame number ieDRX corresponding to the start position of the PTW in the PH is determined according to the following formula:

$$\text{SFN} = 128 * \text{ieDRX},$$

where

$$\text{ieDRX} = \text{floor}(\text{UE_ID_H}/\text{TeDRX}) \text{ mod } 8.$$

UE_ID_H is 13 most significant bits of a hashed ID, and the hashed ID is a frame check sequence obtained by performing an operation on 32 least significant bits of a 5G-S-TMSI according to a frame check sequence generation method. TeDRX is an eDRX cycle of the UE, and is measured in hyperframes.

In this case, a method for calculating the PF and the PO is the same as the method for calculating the PF and the PO in case 1. Details are as follows:

An SFN that satisfies the following formula is used as the PF:

$$\text{SFN mod T} = (\text{T div N}) * (\text{UE_ID mod N}).$$

An index number i_s corresponding to the PO is determined according to the following formula:

$$\text{i_s} = \text{floor}(\text{UE_ID}/\text{N}) \text{ mod Ns}.$$

$$\text{UE_ID} = \text{5G-S-TMSI mod 4096}.$$

In this case, to avoid excessive buffered data of each UE accumulated at the gNB due to excessively long sleep time of the UE, buffering data at a UPF is considered.

Specific steps include: Before delivering an inactive eDRX configuration to the UE, a radio access network (next generation RAN, NG-RAN) needs to notify a core network of related information such as the inactive eDRX configuration, that is, S44 to S49 are performed, so that the core network learns of reachability time of the UE, and determines a buffer time length based on the reachability time, for example, performs buffering until next reachability time, and then data is sent to a RAN side. In this way, the gNB does not need to buffer data for an excessively long time. The reachability time is time at which the UE wakes up next time and monitors paging.

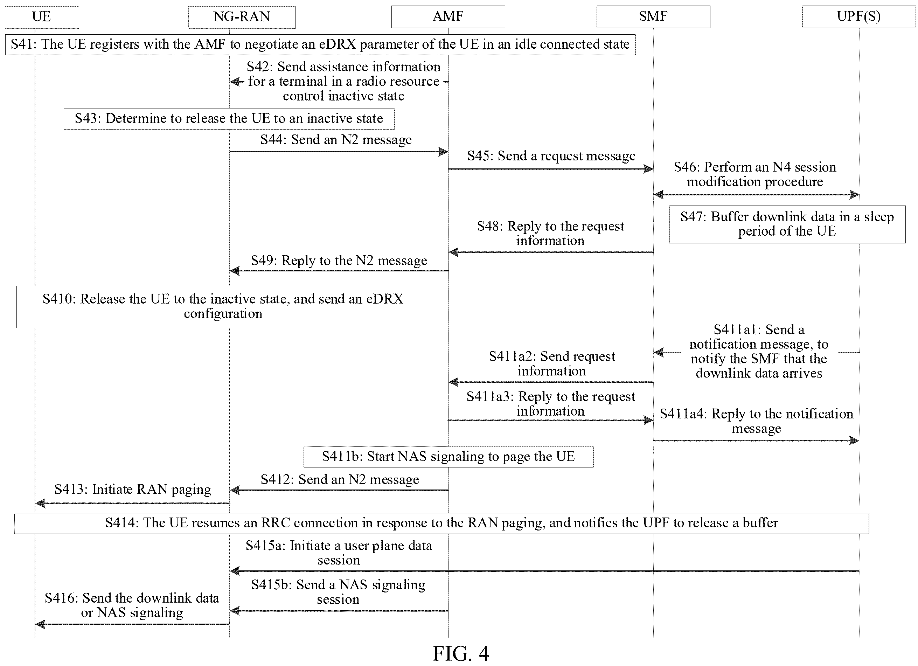

For example, FIG. 4 is a diagram of an application scenario according to another embodiment of this application. As shown in FIG. 4, the method includes the following steps.

S41: UE registers with an AMF to negotiate an eDRX parameter of the UE in an idle connected state CM-IDLE.

S42: The AMF sends assistance information of a terminal in a radio resource control inactive state to an NG-RAN.

The assistance information includes an eDRX configuration parameter of UE in the inactive state.

For example, the AMF sends RRC_INACTIVE assistance info information to the NG-RAN.

S43: The NG-RAN determines to release the UE to the inactive state.

S44: The NG-RAN sends an N2 message to the AMF.

When an eDRX cycle is greater than 10.24s, the NG-RAN sends the N2 message to the AMF, where the N2 message includes an inactive eDRX configuration parameter.

S45: The AMF sends request information to an SMF, where the request information indicates a core network to set a UPF to buffer downlink data.

For example, the AMF sends Nsmf_PDUSession_UpdateSMContext request information to the SMF.

S46: The SMF and the UPF perform an N4 session modification procedure.

For example, the SMF sends N4 session modification information to the UPF.

S47: The UPF buffers the downlink data in a sleep period of the UE.

S48: The SMF replies to the request information of the AMF.

For example, the SMF sends an Nsmf_PDUSession_UpdateSMContext response to the AMF, to reply to the Nsmf_PDUSession_UpdateSMContext request information sent by the AMF.

S49: The AMF replies to the N2 message of the NG-RAN.

For example, the AMF sends an N2 response to the NG-RAN.

S410: The NG-RAN releases the UE to the inactive state, and sends an eDRX configuration to the UE.

In this case, the UE is in an RRC_INACTIVE state in CM_CONNECTED at the AMF, and the UE is in an RRC_INACTIVE state at the NG-RAN.

After buffer time expires, if there is data or signaling that needs to be sent to the UE, the core network sends an N2 message to an access network, to indicate an access network device to start RAN paging. After resuming an RRC connection in response to the paging, the UE notifies the UPF to release a buffer (S414), so as to transmit subsequent data (S415a) or signaling (S415b).

S411a1: The UPF sends a notification message to the SMF, to notify the SMF that downlink data arrives.

For example, when sensing that downlink data to be sent to the UE exists in a network, the UPF sends data notification information to the AMF, to notify the SMF that the downlink data arrives.

S411a2: The SMF sends request information to the AMF.

For example, the SMF sends an Namf_MT_EnableUERechability request to the AMF, to notify the AMF that the downlink data arrives.

S411a3: The AMF replies to the request information sent by the SMF.

For example, after receiving the Namf_MT_EnableUERechability request sent by the SMF, the AMF replies to the message, where reply information carries next reachability time of the UE.

S411a4: The SMF replies to the notification message sent by the UPF.

For example, the SMF transmits a reply message of the AMF to the UPF, to notify the UPF of time for releasing buffered data.

S411b: The AMF starts NAS signaling to page the UE.

For example, when the next reachability time of the UE is to arrive, the AMF starts the NAS signaling to page the UE.

S412: The AMF sends an N2 interface message to the NG-RAN, where the message includes a request for requesting the UE to establish an RRC connection.

S413: The NG-RAN initiates RAN paging to the UE.

S414: The UE resumes an RRC connection in response to the RAN paging, and notifies the UPF to release the buffer.

S415a: The UPF initiates a user plane data session to the NG-RAN, to transmit the downlink data.

S415b: The AMF sends a NAS signaling session to the NG-RAN, to transmit the downlink data.

S416: The NG-RAN sends the downlink data/NAS signaling to the UE.

When S413 is performed, before initiating RAN paging to the UE, the access network device needs to determine an inactive eDRX configuration, and calculate a PH, a start position of a PTW, a PF, and a PO. UE_ID, T, UE_ID_H, and TeDRX need to be used for calculating the PH, the start position of the PTW, the PF, and the PO. However, the access network device has neither of UE_ID and UE_ID_H.

For the problems in case 1 and case 2, this application provides a paging method and a paging apparatus for a terminal, to page UE in an inactive state in an eDRX cycle.

The following describes, by using specific embodiments, in detail the technical solutions of this application and how the technical solutions of this application resolve the foregoing technical problems. The following describes embodiments of this application with reference to the accompanying drawings. This application is performed by a controller, and the following steps may be implemented by using software or a combination of hardware and software.

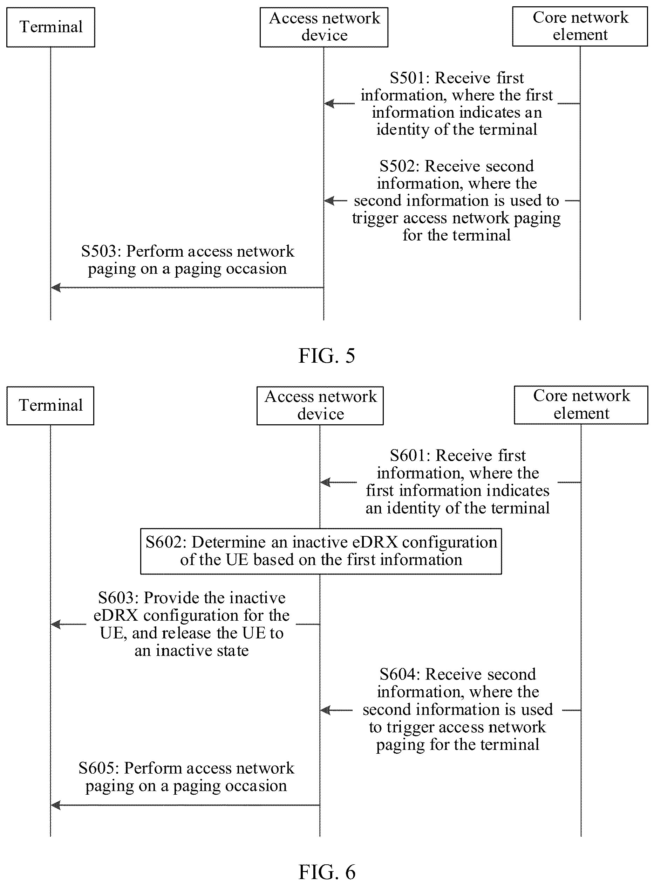

FIG. 5 is a schematic flowchart of a paging method for a terminal according to an embodiment of this application. As shown in FIG. 5, the method includes S501 to S503.

S501: An access network device receives first information from a core network element, where the first information indicates an identity of a terminal, and the identity is used to determine a paging occasion for the terminal.

The access network device may be a gNB, and the core network element may be an AMF network element.

For example, after receiving the first information sent by the AMF, the gNB may determine the identity of the UE and the PO for the UE based on the first information.

Optionally, that the first information indicates the identity of the terminal may be understood as that the first information may include the identity of the terminal, or the first information may indicate other information including the identity of the terminal, or the first information is the identity of the terminal.

In a possible implementation, for example, the first information may be core network assistance information for RRC_INACTIVE (Core Network Assistance Information for RRC INACTIVE), and the identity of the UE may be newly added to a field (IE) of the assistance information.

Optionally, the identity of the UE may include a first identity index value of the UE and a second identity index value of the UE.

The first identity index value may be an identity index value of the terminal in an eDRX cycle, and the second identity index value may be an identity index value of the terminal obtained through a hash operation in the eDRX cycle.

For example, the first identity index value may be UE_ID, and the second identity index value may be UE_ID_H.

The following table is an example of the core network assistance information for RRC INACTIVE.

| IE/Group name | Presence | Range | IE type and reference | Semantics description | Criticality | Assigned criticality |
|---|---|---|---|---|---|---|
| Terminal identity index value | M | | 9.3.3.23 | | | |
| Terminal-specific DRX | O | | Paging DRX 9.3.1.90 | | | |
| Periodic registration update time | M | | 9.3.3.24 | | | |
| Extended terminal identity index value | O | | 9.3.3.XX | | | |

(continued)

| IE/Group name | Presence | Range | IE type and reference | Semantics description | Criticality | Assigned criticality |
|---|---|---|---|---|---|---|
| ... | | | | | | |
| Terminal identity index value in the eDRX cycle | O | | 9.3.3.XX | | | |
| Terminal identity index value obtained through the hash operation in the eDRX cycle | O | | 9.3.3.XX | | | |

In presence, M indicates mandatory, and O indicates optional.

The identity index value of the terminal is an identity index value of the terminal in an existing DRX cycle, and has 10 bits. The identity index value of the terminal in the eDRX cycle may be UE_ID.

In a possible implementation, the identity index value of the terminal in the eDRX cycle may have 12 bits.

In this implementation, the gNB may directly determine the PO for the UE based on the identity index value of the terminal in the eDRX cycle.

In another possible implementation, the identity index value of the terminal in the eDRX cycle may have 2 bits.

In this implementation, after receiving the assistance information, the gNB may use the assistance information in combination with the identity index value of the terminal in the existing DRX cycle in the assistance information, so as to determine the 12-bit identity index value of the terminal in the eDRX cycle, and further determine the PO for the UE.

The identity index value of the terminal obtained through the hash operation in the eDRX cycle may be UE_ID_H, and have 13 bits.

In a possible implementation, UE_ID may be further determined according to the following method:

An extended identity index value (extended UE identity index value) field of the terminal exists in the assistance information, the field has 16 bits, and 12 least significant bits of the field may be used as UE_ID.

Optionally, the identity of the UE may be 32 least significant bits of a 5G-S-TMSI.

The following table is another example of the core network assistance information for RRC INACTIVE.

| IE/Group name | Presence | Range | IE type and reference | | Semantics description | Criticality | Assigned criticality |
|---|---|---|---|---|---|---|---|
| Terminal identity index value | M | | 9.3.3.23 | | | | |
| Terminal-specific DRX | O | | Paging DRX 9.3.1.90 | | | | |
| Periodic registration update time | M | | 9.3.3.24 | | | | |
| Extended terminal identity index value | O | | 9.3.3.XX | | | | |
| ... | | | | | | | |
| 32 least significant bits of a globally unique temporary terminal identifier in the eDRX cycle | O | | 9.3.3.XX | | | | |

For example, after receiving 32 least significant bits that are of a 5G-S-TMSI and that are sent by the AMF, the gNB may determine the identity of the UE in the following manner.

For example, 12 least significant bits in the 32 least significant bits of the 5G-S-TMSI are used as UE_ID; and 13 most significant bits of a hashed ID obtained by performing an operation on the 32 least significant bits of the 5G-S-TMSI according to a frame check sequence generation method are used as UE_ID_H.

Optionally, the identity of the UE may alternatively be 32 least significant bits of a temporary mobile subscriber identity (serving-temporary mobile subscriber identity, S-TMSI). A method for determining the identity of the UE by using the S-TMSI is consistent with the method for determining the identity of the UE by using the 5G-S-TMSI. Details are not described herein.

In some possible implementations, the first information may be carried in a first message, and the first message includes an initial context setup request message (UE CONTEXT MODIFICATION REQUEST), a terminal device context modification request message (UE CONTEXT MODIFICATION REQUEST), a handover request message (HANDOVER REQUEST), or a path switch request acknowledgment message (PATH SWITCH REQUEST ACKNOWLEDGE).

For example, in a step in which the AMF creates a UE context in the gNB by using the INITIAL CONTEXT SETUP REQUEST message, the AMF may send the first information to the gNB by using the INITIAL CONTEXT SETUP REQUEST message.

For another example, in a step in which the AMF modifies a UE context in the gNB by using the CONTEXT MODIFICATION REQUEST message, the AMF may send the first information to the gNB by using the CONTEXT MODIFICATION REQUEST message.

After the identity of the UE is determined, for determining of the PO, refer to the method for determining the PO in the foregoing embodiment. Details are not described herein.

It should be noted that 12-bit UE_ID is used to calculate a PO for the UE when the eDRX cycle does not exceed 10.24s, and 12-bit UE_ID and 13-bit UE_ID_H are used to calculate a PO for the UE when the eDRX cycle exceeds 10.24s.

It should be understood that after receiving the first information sent by the AMF, the gNB may further determine an inactive eDRX configuration, for example, the eDRX cycle, of the UE based on the first information, and provide the inactive eDRX configuration for the UE, to release the UE to an inactive state.

S502: Receive second information from the core network element, where the second information is used to trigger access network paging for the terminal.

In this embodiment, before reachability time of the UE arrives, the AMF may send the second information to the gNB, to trigger the gNB to start RAN paging for the UE.

For example, the AMF may send an N2 message to the gNB, where the N2 message may carry the second information. When receiving the N2 message, the gNB starts RAN paging.

Optionally, the N2 message may alternatively carry an inactive radio network temporary identifier (inactive radio network temporary identifier, I-RNTI), to explicitly indicate the identity of the paged UE.

After receiving the N2 message sent by the AMF, the gNB may determine, based on the I-RNTI carried in the N2 message, the UE to be paged.

Optionally, the N2 message may alternatively carry an identifier that uniquely identifies a UE association over an NG interface within the access network device (RAN UE NGAP ID).

The RAN UE NGAP ID is used to uniquely identify the UE over the NG interface within the gNB. The gNB may determine, by using the RAN UE NGAP ID, the UE to be paged, and may further determine an I-RNTI of the UE by using a correspondence that is between the RAN UE NGAP ID and the I-RNTI and that is stored in the gNB.

In this embodiment, optionally, the N2 message sent by the AMF to the gNB may also carry the first information, that is, the identity of the UE.

The identity of the UE may be the first identity index value of the UE and the second identity index value of the UE, or may be the 32 least significant bits of the 5G-S-TMSI or the 32 least significant bits of the S-TMSI. For a specific implementation thereof, refer to S501. Details are not described herein.

S503: Perform access network paging for the terminal on the paging occasion.

For example, after determining the PO for the UE and the UE to be paged, the gNB pages the UE.

In this case, if the paging performed by the gNB for the UE fails, it indicates that the UE may move to another base station. Therefore, as a last serving base station (anchor gNB) of the UE, when paging the UE, the gNB also notifies another base station in an RNA area to page the UE. The UE detects, through monitoring, a paging message that belongs to the UE, responds to the paging message, and initiates connection resume from another base station. For a specific implementation, refer to the embodiment shown in FIG. 3. Details are not described herein.

When notifying the another base station, for example, a second gNB, in the RNA area to page the UE, the anchor gNB sends the inactive eDRX configuration of the UE to the second gNB through an Xn interface or an F1 interface.

The Xn interface is an interface for sending information between gNBs, and the F1 interface is an interface for sending information between a central unit (Central Unit, CU) and a distributed unit (Distributed Unit, DU) of the gNB.

Optionally, the inactive eDRX configuration of the UE includes information such as the I-RNTI or the identity.

In this embodiment, the gNB may receive the identity of the UE from the first information sent by the AMF, or may receive the identity of the UE from the N2 message sent by the AMF, so as to determine the PO for the UE, and then complete paging for the UE.

In a possible implementation, the gNB may receive a first-part identity in the identity of the UE from the first information sent by the AMF, and receive a second-part identity in the identity of the UE from the N2 message sent by the AMF, to determine the PO for the UE, so as to complete paging for the UE.

In this implementation, the first-part identity may be the first identity index value of the UE, for example, UE_ID, and the second-part identity may be the second identity index value of the UE, for example, UE_ID_H. For a specific implementation, refer to S501 and S502. Details are not described herein.

For example, FIG. 6 is a schematic flowchart of a paging method for a terminal according to another embodiment of this application. As shown in FIG. 6, the method includes S601 to S605.

S601: An access network device receives first information from a core network element, where the first information indicates an identity of a terminal, and the identity is used to determine a paging occasion for the terminal.

For a specific implementation of S601, refer to S501. Details are not described herein.

S602: Determine an inactive eDRX configuration of the UE based on the first information.

For example, when the first information is core network assistance information for RRC INACTIVE, a gNB may determine the inactive eDRX configuration of the UE based on the information.

The inactive eDRX configuration of the UE includes an eDRX cycle.

S603: Provide the inactive eDRX configuration for the UE, and release the UE to an inactive state.

S604: Receive second information from the core network element, where the second information is used to trigger access network paging for the terminal.

S605: Perform access network paging for the terminal on the paging occasion.

For a specific implementation of S604 and S605, refer to S502 and S503. Details are not described herein.

In this embodiment of this application, if the eDRX cycle of the UE in the inactive state exceeds 10.24s, the access network device further needs to send the inactive eDRX configuration to the core network element, to buffer data of each UE at a UPF, so as to avoid a problem that excessive buffered data is accumulated at the gNB due to excessively long sleep time of the UE. For details, refer to the embodiment shown in FIG. 4. Details are not described herein.

It should be understood that the technical solutions and technical concepts provided in this application may be applied to a 5G network architecture, and may also be applied to another communication system.

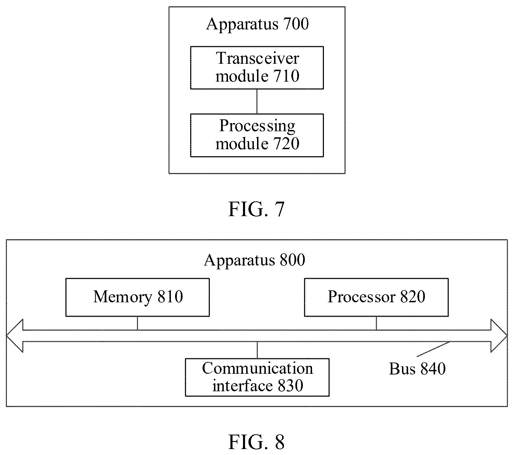

FIG. 7 is a diagram of a structure of a paging apparatus for a terminal according to an embodiment of this application. The apparatus 700 shown in FIG. 7 may be configured to implement the steps performed by the access network device or the core network element in FIG. 5 or FIG. 6. As shown in FIG. 7, the apparatus 700 in this embodiment may include a transceiver module 710 and a processing module 720.

When the apparatus 700 is configured to implement the method implemented by the access network device in FIG. 5, the transceiver module 710 may be configured to implement the operations performed by the access network device in S501, S502, and S503.

When the apparatus 700 is configured to implement the method implemented by the core network element in FIG. 5, the transceiver module 710 may be configured to implement the operations performed by the core network element in S501 and S502.

When the apparatus 700 is configured to implement the method implemented by the access network device in FIG. 6, the transceiver module 710 may be configured to implement the operations performed by the access network device in S601, S603, S604, and S605.

When the apparatus 700 is configured to implement the method implemented by the core network element in FIG. 6, the transceiver module 710 may be configured to implement the operations performed by the core network element in S601 and S604, and the processing module 720 may be configured to implement S602.

FIG. 8 is a diagram of a structure of a paging apparatus for a terminal according to another embodiment of this application. The apparatus 800 shown in FIG. 8 may be configured to implement the method performed by the access network device or the core network element in any one of the foregoing embodiments.

As shown in FIG. 8, the apparatus 800 in this embodiment includes a memory 810, a processor 820, a communication interface 830, and a bus 840. The memory 810, the processor 820, and the communication interface 830 implement mutual communication connections through the bus 840.

The memory 810 may be a read-only memory (read-only memory, ROM), a static storage device, a dynamic storage device, or a random access memory (random access memory, RAM). The memory 810 may store a program. When the program stored in the memory 810 is executed by the processor 820, the processor 820 is configured to perform the steps performed by the access network device or the core network element in the method shown in FIG. 5 or FIG. 6.

The processor 820 may be a general-purpose central processing unit (central processing unit, CPU), a microprocessor, an application-specific integrated circuit (application-specific integrated circuit, ASIC), or one or more integrated circuits, and is configured to execute a related program, to implement the method for measuring an azimuth of an active antenna unit in the method embodiments of this application.

The processor 820 may alternatively be an integrated circuit chip and has a signal processing capability. In an implementation process, the steps of the method for measuring an azimuth of an active antenna unit in embodiments of this application may be completed by using an integrated logic circuit of hardware in the processor 820, or by using instructions in a form of software.

The processor 820 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like.

The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 810. The processor 820 reads information in the memory 810, and completes, in combination with hardware of the processor, functions that need to be performed by units included in the apparatus for measuring an azimuth of an active antenna unit in this application. For example, the processor may perform the steps/functions performed by the access network device or the core network element in the method shown in FIG. 5 or FIG. 6.

The communication interface 830 may use but is not limited to a transceiver apparatus like a transceiver, to implement communication between the apparatus 800 and another device or a communication network.

The bus 840 may include a path for transmitting information between the components (for example, the memory 810, the processor 820, and the communication interface 830) of the apparatus 800.

It should be noted that the modules or components in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form in which a processing element invokes program code, the processing element may be a general-purpose processor, for example, a central processing unit (central processing unit, CPU) or another processor that can invoke the program code, for example, a controller. For another example, the modules may be integrated together and implemented in a form of a system-on-a-chip (system-on-a-chip, SoC).

All or some of the foregoing embodiments may be implemented by using software, hardware, firmware, a software module, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The term "a plurality of" in this specification refers to two or more. The term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between associated objects, and the character "/" in the formula indicates a "division" relationship between the associated objects. In addition, it should be understood that in the descriptions of this application, words such as "first" and "second" are merely used for distinguishing, and cannot be understood as an indication or implication of relative importance or an indication or implication of a sequence.

It may be understood that various numbers in embodiments of this application are merely used for differentiation for ease of description, and are not used to limit the scope of embodiments of this application.

It may be understood that in embodiments of this application, sequence numbers of processes do not mean a sequence of execution. The sequence of execution of the processes should be determined according to functions and internal logic of the processes, and should not constitute any limitation on an implementation process of embodiments of this application.

## Claims

**1.** A method for paging a terminal, wherein a discontinuous reception cycle of the terminal in an inactive state is an extended discontinuous reception cycle, the method is applied to a first access network device side, and the method comprises:

receiving first information, wherein the first information indicates an identity of the terminal, and the identity is used to determine a paging occasion for the terminal;
receiving second information, wherein the second information is used to request access network paging for the terminal; and
performing access network paging for the terminal on the paging occasion.

**2.** The method according to claim 1, wherein receiving the second information comprises:
receiving an N2 message, wherein the N2 message carries the second information, and the second information comprises an inactive radio network temporary identifier or an identifier that uniquely identifies a UE association over an NG interface within an access network device.

**3.** The method according to claim 1 or 2, wherein receiving the first information comprises:
receiving a first message, wherein the first message comprises an initial context setup request message, a terminal device context modification request message, a handover request message, or a path switch request acknowledgment message, and the first message carries the first information.

**4.** The method according to claim 2, wherein the N2 message further carries the first information.

**5.** The method according to claim 3 or 4, wherein the identity comprises a first identity index value of the terminal and/or a second identity index value of the terminal.

**6.** The method according to claim 5, wherein the first identity index value is used to determine a paging frame for the terminal and/or the paging occasion for the terminal.

**7.** The method according to claim 6, wherein a length of the first identity index value is 12 bits, or a length of the first identity index value is 16 bits, and the first identity index value is determined by a 5th generation system temporary mobile subscriber identity 5G-S-TMSI.

**8.** The method according to any one of claims 5 to 7, wherein the second identity index value is used to determine at least one of the following information: a paging hyperframe for the terminal, a frame number corresponding to a start position of a paging time window for the terminal, the paging frame for the terminal, or the paging occasion for the terminal.

**9.** The method according to claim 8, wherein the second identity index value is 13 most significant bits of a hashed identifier, and the hashed identifier is a frame check sequence obtained by performing an operation on 32 least significant bits of the 5G-S-TMSI according to a frame check sequence generation method.

**10.** The method according to claim 3 or 4, wherein the identity comprises 32 least significant bits of a globally unique temporary terminal identifier.

**11.** The method according to claim 1 or 2, wherein the identity comprises a first-part identity and a second-part identity; and
receiving the first information comprises:

receiving a first message, wherein the first message comprises an initial context setup request message, a terminal device context modification request message, a handover request message, or a path switch request acknowledgment message, and the first message carries the first-part identity; and
receiving an N2 message, wherein the N2 message carries the second-part identity.

**12.** The method according to claim 11, wherein the first-part identity comprises a first identity index value of the terminal, and the second-part identity comprises a second identity index value of the terminal.

**13.** The method according to any one of claims 1 to 12, wherein the method further comprises:
sending the first information.

**14.** A method for paging a terminal, wherein a discontinuous reception cycle of the terminal in an inactive state is an extended discontinuous reception cycle, and the method comprises:

sending first information, wherein the first information indicates an identity of the terminal, and the identity is used to determine a paging occasion for the terminal; and
sending second information, wherein the second information is used to request access network paging for the terminal.

**15.** The method according to claim 14, wherein sending the second information comprises:
sending an N2 message, wherein the N2 message carries the second information, and the second information comprises an inactive radio network temporary identifier or an identifier that uniquely identifies a UE association over an NG interface within an access network device.

**16.** The method according to claim 14 or 15, wherein sending the first information comprises:
sending a first message, wherein the first message comprises an initial context setup request message, a terminal device context modification request message, a handover request message, or a path switch request acknowledgment message, and the first message carries the first information.

**17.** The method according to claim 15, wherein the N2 message further carries the first information.

**18.** The method according to claim 16 or 17, wherein the identity comprises a first identity index value of the terminal and/or a second identity index value of the terminal.

**19.** The method according to claim 18, wherein the first identity index value is used to determine a paging frame for the terminal and/or the paging occasion for the terminal.

**20.** The method according to claim 19, wherein a length of the first identity index value is 12 bits, or a length of the first identity index value is 16 bits, and the first identity index value is determined by a 5th generation system temporary mobile subscriber identity 5G-S-TMSI.

**21.** The method according to any one of claims 18 to 20, wherein the second identity index value is used to determine at least one of the following information: a paging hyperframe for the terminal, a frame number corresponding to a start position of a paging time window for the terminal, the paging frame for the terminal, or the paging occasion for the terminal.

**22.** The method according to claim 21, wherein the second identity index value is 13 most significant bits of a hashed identifier, and the hashed identifier is a frame check sequence obtained by performing an operation on 32 least significant bits of the 5G-S-TMSI according to a frame check sequence generation method.

**23.** The method according to claim 16 or 17, wherein the identity comprises 32 least significant bits of a globally unique temporary terminal identifier.

**24.** The method according to claim 14 or 15, wherein the identity comprises a first-part identity and a second-part identity; and
sending the first information comprises:

sending a first message, wherein the first message comprises an initial context setup request message, a terminal device context modification request message, a handover request message, or a path switch request acknowledgment message, and the first message carries the first-part identity; and
sending an N2 message, wherein the N2 message carries the second-part identity.

**25.** The method according to claim 22, wherein the first-part identity comprises a first identity index value of the terminal, and the second-part identity comprises a second identity index value of the terminal.

**26.** A method for paging a terminal, wherein a discontinuous reception cycle of the terminal in an inactive state is an extended discontinuous reception cycle, the method is applied to a second access network device side, and the method comprises:

receiving first information, wherein the first information indicates an identity of the terminal, and the identity is used to determine a paging occasion for the terminal; and
performing access network paging for the terminal on the paging occasion.

**27.** The method according to claim 26, wherein the identity comprises a first identity index value of the terminal and/or a second identity index value of the terminal.

**28.** The method according to claim 27, wherein the first identity index value is used to determine a paging frame for the terminal and/or the paging occasion for the terminal.

**29.** The method according to claim 28, wherein a length of the first identity index value is 12 bits, or a length of the first identity index value is 16 bits, and the first identity index value is determined by a 5th generation system temporary mobile subscriber identity 5G-S-TMSI.

**30.** The method according to any one of claims 27 to 29, wherein the second identity index value is used to determine at least one of the following information: a paging hyperframe for the terminal, a frame number corresponding to a start position of a paging time window for the terminal, the paging frame for the terminal, or the paging occasion for the terminal.

**31.** The method according to claim 30, wherein the second identity index value is 13 most significant bits of a hashed identifier, and the hashed identifier is a frame check sequence obtained by performing an operation on 32 least significant bits of the 5G-S-TMSI according to a frame check sequence generation method.

**32.** The method according to claim 26, wherein the identity comprises 32 least significant bits of a globally unique temporary terminal identifier.

**33.** An apparatus for paging a terminal, comprising functional modules configured to implement the method according to any one of claims 1 to 13, any one of claims 14 to 25, or any one of claims 26 to 32.

**34.** An apparatus for paging a terminal, comprising a memory and a processor, wherein

the memory is configured to store program instructions; and
the processor is configured to invoke the program instructions in the memory to perform the method according to any one of claims 1 to 13, any one of claims 14 to 25, or any one of claims 26 to 32.

**35.** A computer program product, comprising computer program code, wherein when the computer program code is run on a computer, the computer is enabled to implement the method according to any one of claims 1 to 13, any one of claims 14 to 25, or any one of claims 26 to 32.

**36.** A computer-readable medium, wherein the computer-readable medium stores program code for execution by a computer, and the program code comprises instructions used to perform the method according to any one of claims 1 to 13, any one of claims 14 to 25, or any one of claims 26 to 32.

Terminal device
Access network device
Core network device
Data network

FIG. 1

UDM
N25
N8
N10
AMF
N11
SMF
N7
PCF
N5
AF
N1
N2
N4
UE
RAN
N3
UPF
N6
DN

FIG. 2

UE
Last serving gNB
gNB 2
AMF (UPF)
S31: Send downlink signaling (data)
S32: Notify the gNB 2 to initiate RAN paging
S33a: Determine a paging occasion, and initiate paging
S33b: Determine a paging occasion, and initiate paging
S34: Initiate a connection resume request
S35: Obtain an RRC context
S36: Send the RRC context
S37: RRC connection resume parameter information
S38: Complete RRC connection resume
S39: Report path switch information

FIG. 3

UE
NG-RAN
AMF
SMF
UPF(S)
S41: The UE registers with the AMF to negotiate an eDRX parameter of the UE in an idle connected state
S42: Send assistance information for a terminal in a radio resource control inactive state
S43: Determine to release the UE to an inactive state
S44: Send an N2 message
S45: Send a request message
S46: Perform an N4 session modification procedure
S47: Buffer downlink data in a sleep period of the UE
S48: Reply to the request information
S49: Reply to the N2 message
S410: Release the UE to the inactive state, and send an eDRX configuration
S411a1: Send a notification message, to notify the SMF that the downlink data arrives
S411a2: Send request information
S411a3: Reply to the request information
S411a4: Reply to the notification message
S411b: Start NAS signaling to page the UE
S412: Send an N2 message
S413: Initiate RAN paging
S414: The UE resumes an RRC connection in response to the RAN paging, and notifies the UPF to release a buffer
S415a: Initiate a user plane data session
S415b: Send a NAS signaling session
S416: Send the downlink data or NAS signaling

FIG. 4

Terminal
Access network device
Core network element
S501: Receive first information, where the first information indicates an identity of the terminal
S502: Receive second information, where the second information is used to trigger access network paging for the terminal
S503: Perform access network paging on a paging occasion

FIG. 5

Terminal
Access network device
Core network element
S601: Receive first information, where the first information indicates an identity of the terminal
S602: Determine an inactive eDRX configuration of the UE based on the first information
S603: Provide the inactive eDRX configuration for the UE, and release the UE to an inactive state
S604: Receive second information, where the second information is used to trigger access network paging for the terminal
S605: Perform access network paging on a paging occasion

FIG. 6

Apparatus 700
Transceiver module 710
Processing module 720

FIG. 7

Apparatus 800
Memory 810
Processor 820
Communication interface 830
Bus 840

FIG. 8

## INTERNATIONAL SEARCH REPORT

International application No.
**PCT/CN2024/075410**

**A. CLASSIFICATION OF SUBJECT MATTER**

H04W 68/00(2009.01)i

According to International Patent Classification (IPC) or to both national classification and IPC

**B. FIELDS SEARCHED**

Minimum documentation searched (classification system followed by classification symbols)

IPC: H04W H04L H04B

Documentation searched other than minimum documentation to the extent that such documents are included in the fields searched

Electronic data base consulted during the international search (name of data base and, where practicable, search terms used)

CNTXT, ENTXT, CNABS, CNKI, 3GPP: 寻呼, 时机, 机会, 标识, 非激活, 周期, 扩展非连续接收, 接入网, 身份标识, 切换, 上下文, 索引, 超帧, paging, occasion, identify, ID, inactive, cycle, period, eDRX, access, network, handover, context, index, frame

**C. DOCUMENTS CONSIDERED TO BE RELEVANT**

| Category* | Citation of document, with indication, where appropriate, of the relevant passages | Relevant to claim No. |
|---|---|---|
| Y | WO 2021081736 A1 (HUAWEI TECHNOLOGIES CO., LTD.) 06 May 2021 (2021-05-06)<br>description, paragraphs [0164]-[0304] and [0399]-[0414] | 1-36 |
| Y | WO 2021237693 A1 (GUANGDONG OPPO MOBILE TELECOMMUNICATIONS CORP., LTD.) 02 December 2021 (2021-12-02)<br>description, paragraphs [0076]-[0114] | 1-36 |
| A | CN 113473596 A (HUAWEI TECHNOLOGIES CO., LTD.) 01 October 2021 (2021-10-01)<br>entire document | 1-36 |
| A | CN 115314998 A (VIVO COMMUNICATION TECHNOLOGY CO., LTD.) 08 November 2022 (2022-11-08)<br>entire document | 1-36 |
| A | WO 2022141080 A1 (GUANGDONG OPPO MOBILE TELECOMMUNICATIONS CORP., LTD.) 07 July 2022 (2022-07-07)<br>entire document | 1-36 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 April 2024** | **25 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/075410**

| Patent document cited in search report | Publication date (day/month/year) | Patent family member(s) | Publication date (day/month/year) |
|---|---|---|---|
| WO 2021081736 A1 | 06 May 2021 | CN 114402669 A | 26 April 2022 |
| WO 2021237693 A1 | 02 December 2021 | CN 115362724 A | 18 November 2022 |
| CN 113473596 A | 01 October 2021 | WO 2021197286 A1 | 07 October 2021 |
| CN 115314998 A | 08 November 2022 | WO 2022237615 A1 | 17 November 2022 |
| | | US 2024064701 A1 | 22 February 2024 |
| | | EP 4329395 A1 | 28 February 2024 |
| WO 2022141080 A1 | 07 July 2022 | US 2023337184 A1 | 19 October 2023 |
| | | EP 4271069 A1 | 01 November 2023 |
| | | CN 116548030 A | 04 August 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310131303